# FASCICULE DE BREVET EUROPEEN

(11) **EP 2 665 922 B1**
(45) Date de publication et mention de la délivrance du brevet: **13.03.2019**
(21) Numéro de dépôt: 12700401.8
(22) Date de dépôt: 17.01.2012
(51) Int. Cl.: F03B 3/18, F03B 1/00, F15D 1/04

(54) **ENSEMBLE DE DISTRIBUTION POUR ROUE DE TURBINE PELTON**
SPIRALGEHÄUSE FÜR PELTON TURBO-ARBEITSMASCHINEN
SPIRAL CASING FOR PELTON TURBO MACHINES

(30) Priorité: 18.01.2011 FR 1150384
(43) Date de publication de la demande: 27.11.2013
(73) Titulaire: GE Renewable Technologies, 38100 Grenoble (FR)
(72) Inventeur: FOGGIA, Théophane, 38190 Sainte Agnès (FR); HOUDELINE, Jean-Bernard, 38850 Chirens (FR)
(74) Mandataire: Brannen, Joseph Waclaw
(86) Numéro de dépôt international: PCT/EP2012/050605
(87) Numéro de publication internationale: WO 2012/098095

(56) Documents cités:
- DE-U1-202006 010 272
- FR-A- 1 064 617
- FR-A- 1 220 048
- FR-A1- 2 919 353
- GB-A- 1 228 223
- GB-A- 1 332 232
- US-A- 1 942 995
- US-A1- 2008 283 014
- US-B1- 6 701 963

## Description

La présente invention concerne un ensemble de distribution pour roue de machine hydraulique et une machine hydraulique comprenant un tel ensemble de distribution.

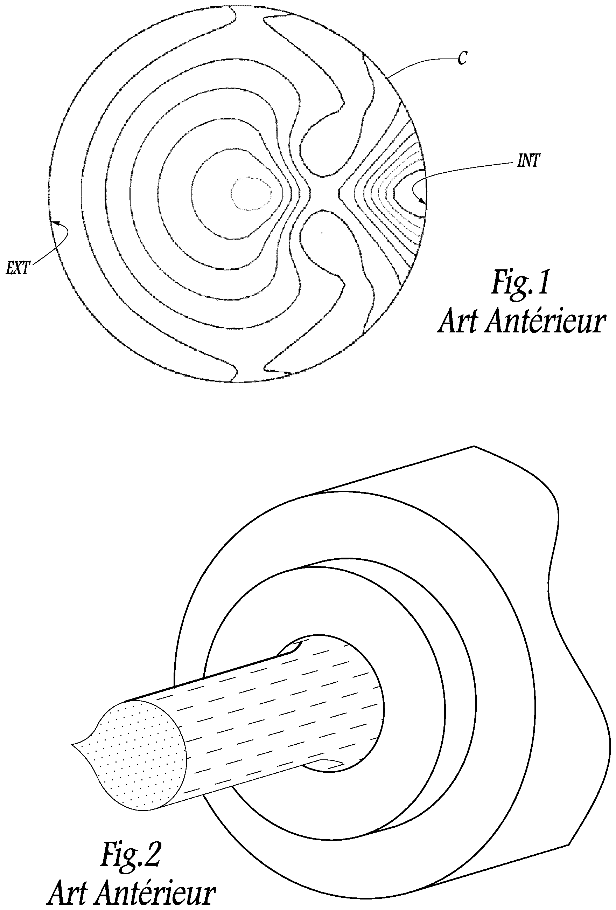

Lorsque de l'eau s'écoule dans un conduit courbe, elle est soumise à des accélérations centrifuges. En particulier, dans un conduit courbe appartenant à un ensemble de distribution destiné à alimenter en eau une roue de turbine Pelton, l'eau suit des trajectoires courbes, le long desquelles elle est soumise à des accélérations centrifuges. Comme le montre la figure 1, qui représente des isobares dans une section transversale d'un conduit courbe C, les accélérations centrifuges génèrent un gradient de pression entre la paroi interne INT et la paroi externe EXT à la courbure du conduit courbe C. Les isobares montrent une répartition hétérogène de l'écoulement dans un ensemble de distribution de l'art antérieur.

Les gradients de pression générés dans la zone centrale du conduit courbe C induisent une circulation circonférentielle de l'eau le long des parois, entre la paroi interne INT et la paroi externe EXT.

L'eau s'écoule principalement longitudinalement dans le conduit courbe C, mais elle présente également des écoulements secondaires qui circulent transversalement à la direction longitudinale du conduit courbe C, par exemple dans le plan de la figure 1. Or, dans le cas d'un ensemble de distribution, de tels écoulements secondaires réduisent l'énergie cinétique de chaque jet d'eau qui, en sortie de l'ensemble de distribution, actionnent la roue de la turbine Pelton. Comme le montre la figure 2, à cause de ces écoulements secondaires, les jets d'eau en sortie de l'ensemble de distribution ont des formes non cylindriques et sont déviés. Ainsi, les écoulements secondaires affectent le rendement de la turbine Pelton.

US-A-1,942,995 divulgue une turbine hydraulique comprenant une roue de turbine incluant des pales dans lesquelles sont ménagés des canaux et des orifices de passage d'un flux d'eau. FR-A1-21919 353 divulgue une turbine Pelton comprenant un collecteur avec des zones d'injection d'eau, saillantes du collecteur, vers la roue de la turbine, par l'intermédiaire de bifurcations. DE-U1-20 2006 010 272 divulgue une turbine Pelton incluant un distributeur avec des conduites courbes qui sont pourvues d'encoches à proximité de leur ouverture d'admission.

FR-A-1 064 617 divulgue un conduit d'injection coudé pour machine hydraulique. Trois ailettes de guidage de l'écoulement sont fixées à l'intérieur du conduit et sont orientées selon la courbure du conduit. De telles ailettes ne permettent pas de réduire de manière satisfaisante la vitesse des écoulements secondaires, ce qui diminue le rendement de la machine hydraulique.

C'est à ces inconvénients qu'entend plus particulièrement remédier l'invention en proposant un ensemble de distribution, destiné à canaliser un écoulement d'eau, qui maximise l'énergie cinétique de l'écoulement dans le conduit et l'énergie cinétique du jet d'eau en sortie du conduit.

A cet effet, l'invention a pour objet un ensemble de distribution appartenant à une machine hydraulique et comprenant un conduit courbe destiné à canaliser un écoulement d'eau pour alimenter une roue de la machine hydraulique cette roue étant destinée à tourner autour d'un axe de rotation. Le conduit courbe est pourvu d'ailettes qui sont fixées à sa paroi intérieure. Selon l'invention, les ailettes comportent des ouvertures.

Grâce à l'invention, l'écoulement d'eau dans le conduit courbe est faiblement dispersé, c'est-à-dire que les vitesses des écoulements secondaires sont réduites par rapport aux vitesses des écoulements secondaires qui apparaissent dans des conduits courbes de l'art antérieur.

Selon des aspects avantageux de l'invention, un tel ensemble de distribution peut incorporer une ou plusieurs des caractéristiques suivantes, prises dans toute combinaison techniquement admissible :
- Dans une section transversale du conduit courbe, une hauteur de chaque ailette, mesurée perpendiculairement à un axe longitudinal de cette ailette, est comprise entre 1 centième et 1 dixième du diamètre intérieur du conduit courbe.
- Les ailettes forment, dans une section transversale du conduit courbe, un maillage de toute cette section.
- Les ouvertures sont circulaires et le diamètre de chaque ouverture est compris entre 0,5 millième et 5 millièmes du diamètre intérieur du conduit courbe.
- Les ouvertures sont de forme non circulaire.
- Un axe longitudinal de chaque ailette est parallèle à un axe longitudinal du conduit courbe.
- Un axe longitudinal des ailettes est oblique par rapport à un axe longitudinal du conduit courbe.
- Les ailettes sont des grilles qui présentent plusieurs rangées d'ouvertures.
- L'ensemble de distribution est configuré pour alimenter une roue de turbine Pelton.

Enfin, l'invention a pour objet une machine hydraulique comprenant au moins un tel ensemble de distribution.

L'invention sera mieux comprise et d'autres avantages de celle-ci apparaîtront plus clairement à la lumière de la description qui va suivre d'un conduit courbe et d'une turbine Pelton conformes à son principe, donnée uniquement à titre d'exemple et faite en référence aux dessins annexés dans lesquels :
- la figure 1 est une coupe transversale d'un ensemble de distribution de l'art antérieur, sur laquelle sont représentées les isobares dans l'écoulement ;
- la figure 2 est une vue en perspective d'un jet d'eau en sortie de l'ensemble de distribution de la figure 1 ;
- la figure 3 est une coupe, suivant le plan équatorial de la portion de tore que forme le conduit de distribution, d'un ensemble de distribution conforme à l'invention ;
- la figure 4 est une coupe suivant la ligne IV-IV à la figure 3 ;
- la figure 5 est une vue de face d'une ailette qui équipe l'ensemble de distribution de la figure 3 ;
- la figure 6 est une coupe analogue à la figure 4 d'un conduit conforme à un deuxième mode de réalisation de l'invention ; et
- la figure 7 est une coupe analogue à la figure 4 d'un conduit conforme à un troisième mode de réalisation de l'invention.

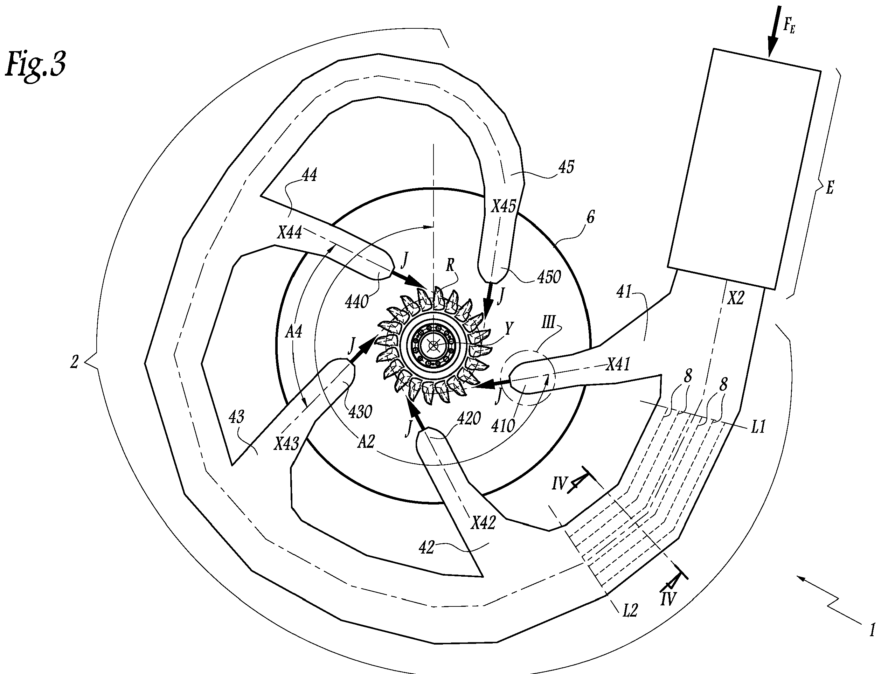

La figure 3 illustre un ensemble de distribution ou distributeur 1 destiné à alimenter en eau une roue R de turbine Pelton connue en soi. La roue R présente globalement une symétrie de révolution suivant un axe Y, autour duquel elle est destinée à tourner. L'axe Y est perpendiculaire au plan de la figure 3.

Une conduite d'entrée E amène au distributeur 1 un flux d'eau qui est symbolisé par une flèche F_{E}. La conduite d'entrée E est située en amont du distributeur 1. Dans la présente demande, les termes « amont » et « aval » font référence au sens général d'écoulement de l'eau dans la machine hydraulique comprenant le distributeur 1 et la roue R.

Le distributeur 1 comprend un conduit de distribution 2 et plusieurs conduits d'injection dont le nombre peut-être compris entre un et six. Dans cet exemple, cinq conduits d'injection 41, 42, 43, 44 et 45 sont représentés et sont formés par des piquages dirigés, à partir du conduit de distribution 2, vers la roue R. Le conduit de distribution 2 a globalement une forme de portion de tore dont l'axe de révolution est sensiblement parallèle à l'axe Y.

On note X2, un axe longitudinal courbe du conduit de distribution 2, qui suit la courbure du conduit de distribution 2. L'axe X2 passe par le centre de chaque section transversale du conduit de distribution 2.

Chaque conduit d'injection 41 à 45 est relié au conduit de distribution 2. Ainsi, une partie du débit d'eau provenant de la conduite d'entrée E est dérivée vers chaque conduit d'injection 41 à 45 par le conduit de distribution 2. L'eau s'écoule donc du conduit de distribution 2 vers chaque conduit d'injection 41 à 45.

Les conduits d'injection 41 à 45 sont répartis autour de l'emplacement occupé par la roue R. Les conduits d'injection 41 à 45 sont répartis uniformément autour de l'axe Y et à la périphérie de la roue R. Deux conduits d'injection successifs, par exemple les conduits d'injection 44 et 45, sont donc séparés par un angle A4 d'environ 72°.

Chaque conduit d'injection 41 à 45 est agencé de façon à injecter l'eau dans les augets de la roue R, ce qui permet d'entraîner la roue R en rotation autour de son axe Y. Le distributeur 1, la roue R et la conduite d'entrée E forment ensemble une machine hydraulique de type turbine Pelton.

Une extrémité 410, 420, 430, 440, 450 respective de chaque conduit d'injection 41 à 45, située à l'opposé du conduit de distribution 2, est équipée d'une buse qui éjecte un jet d'eau J vers les augets de la roue R. Un mécanisme connu en soi est monté sur le distributeur 1 de façon à actionner une aiguille non représentée de chaque buse. Dans les jets d'eau J, la vitesse d'écoulement s'étend essentiellement suivant une direction longitudinale respective X41, X42, X43, X44, X45 de chaque conduit d'injection 41 à 45.

Comme le montre la figure 3, le conduit de distribution 2 est globalement en forme de portion de tore d'axe Y. Le terme « portion » indique que le tore s'étend « en rond » sur un angle de tore A2 inférieur à 350°. En l'occurrence, l'angle de tore A2 vaut environ 280°. En d'autres termes, le conduit de distribution est en forme de tore « ouvert ».

La totalité du flux d'eau F_{E} entrant dans le conduit de distribution 2 est évacuée par les conduits d'injection 41 à 45. Chaque conduit d'injection 41 à 45 éjecte ensuite un jet d'eau J vers les augets de la roue R. Puis, l'eau est collectée par un bâti 6 avant d'être évacuée par au moins une conduite de sortie non représentée.

Le conduit de distribution 2 est équipé de plusieurs ailettes 8 représentées en pointillés à la figure 3. Les ailettes 8 sont fixées à l'intérieur du conduit de distribution 2 et s'étendent entre le conduit d'injection 41 et le conduit d'injection 42. Plus précisément, dans l'exemple représenté, les ailettes 8 s'étendent à partir d'une ligne L1, située en aval du conduit d'injection 41, et jusqu'à une ligne L2, située en amont du conduit de distribution 42. En complément, les ailettes 8 peuvent équiper d'autres portions du distributeur 1, par exemple au moins un conduit d'injection 41 à 45 ou au moins une autre portion du conduit de distribution 2, voire la totalité du conduit de distribution 2.

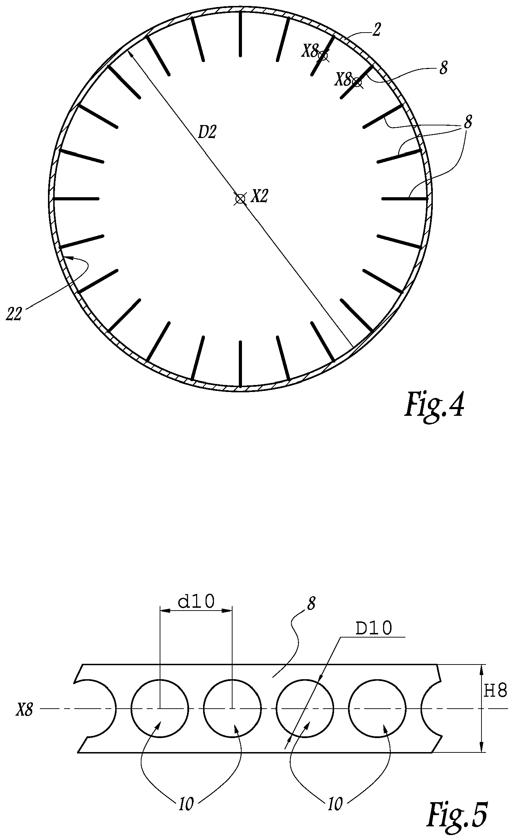

La figure 5 représente partiellement une des ailettes 8. Chaque ailette 8 se présente sous la forme d'une bande de faible épaisseur, d'axe longitudinal X8. On note H8, une hauteur de chaque ailette 8, mesurée perpendiculairement à l'axe longitudinal X8.

Chaque ailette 8 est percée d'ouvertures 10 réparties le long de l'axe longitudinal X8. Les ouvertures 10 sont circulaires et on note D10 leur diamètre. Le diamètre D10 est la dimension maximale des ouvertures 10. On note d10, une distance entre le centre de deux ouvertures 10 adjacentes.

La figure 4 montre une section transversale de la portion du conduit de distribution 2 qui est équipée des ailettes 8. Les ailettes 8 sont fixées à une paroi intérieure 22 du conduit de distribution 2. Le conduit de distribution 2 est équipé de plusieurs ailettes 8 réparties uniformément autour de sa section transversale. Dans la section transversale du conduit de distribution 2, les ailettes s'étendent radialement, c'est-à-dire en direction du centre de la section transversale, par lequel passe l'axe X2. Toutefois, en variante non représentée, les ailettes 8 peuvent ne pas s'étendre radialement.

On note D2, un diamètre interne du conduit de distribution 2, c'est-à-dire un diamètre de la surface interne 22 du conduit de distribution 2. De manière avantageuse mais non obligatoire, le diamètre D10 des ouvertures 10 est compris entre 0,5 millième et 5 millièmes du diamètre D2. De plus, de manière avantageuse mais non obligatoire, la hauteur H8 des ailettes 8 est comprise entre 1 centième et 1 dixième du diamètre D2.

L'axe longitudinal X8 de chaque ailette 8 est parallèle à l'axe longitudinal X2, c'est-à-dire que les ailettes 8 suivent la courbure du conduit de distribution 2. En variante non représentée, l'axe longitudinal X8 d'au moins une ailette 8 peut être oblique par rapport à l'axe longitudinal X2 du conduit de distribution 2. Par exemple, l'axe longitudinal X8 d'au moins une ailette 8 peut s'étendre de manière hélicoïdale à l'intérieur du conduit 2 de distribution 2.

Selon l'invention, les ouvertures 10 de deux ailettes 8 adjacentes sont décalées les unes par rapport aux autres le long de l'axe longitudinal X2. De cette manière, lorsqu'un écoulement secondaire circule transversalement le long de la surface interne 22 du conduit de distribution 2 et passe dans l'ouverture 10 d'une première ailette 8, cet écoulement rencontre un obstacle, formé par une portion de la deuxième ailette 8, située entre deux ouvertures 10 adjacentes.

En service, l'écoulement F_{E} est amené à la conduite d'entrée E de l'ensemble de distribution 1. L'écoulement F_{E} traverse la conduite d'entrée E. En sortie de la conduite d'entrée E, l'écoulement F_{E} se divise en deux. Une première partie de l'écoulement F_{E} est dirigée dans le conduit d'injection 41 et une deuxième partie de l'écoulement F_{E} circule dans le conduit de distribution 2, en direction de la ligne L1. La portion du conduit de distribution 2 située entre les lignes L1 et L2 étant courbe, des écoulements secondaires se forment à proximité de la paroi interne 22 du conduit de distribution 2. Les écoulements secondaires sont transverses, c'est-à-dire qu'ils sont perpendiculaires à un écoulement principal, parallèle à l'axe X2, qui circule dans la zone centrale du conduit de distribution 2.

En circulant le long de la paroi interne 22, les écoulements secondaires rencontrent les ailettes 8 et traversent les ouvertures 10. En traversant les ouvertures 10, les écoulements secondaires sont dissipés avant de pouvoir atteindre la zone centrale du conduit de distribution 2, ce qui empêche les écoulements secondaires de perturber l'écoulement principal.

La disposition des ailettes 8 et des ouvertures 10 ainsi que leurs dimensions sont conçues pour optimiser la dissipation de l'énergie cinétique des écoulements secondaires. Grâce à la faible hauteur H8 des ailettes 8 par rapport au diamètre D2 du conduit de distribution 2, les ailettes H8 n'ont qu'un faible impact sur l'écoulement principal. De plus, le décalage entre les ouvertures 10 de deux ailettes 8 adjacentes permet d'optimiser la dissipation des écoulements secondaires.

Grâce à l'invention, les jets d'eau J, en sortie des conduits d'injection 41 à 45, ne sont pas déviés, c'est-à-dire qu'ils sont respectivement parallèles aux axes X41 à X45. Ainsi, le rendement de la turbine Pelton est optimisé.

En variante non représentée, les ailettes 8 peuvent comporter au moins deux rangées d'ouvertures 10 ménagées chacune le long d'un axe parallèle à l'axe longitudinal X8 d'une ailette 8.

En variante non représentée, les ouvertures 10 sont de forme non circulaire. Par exemple, les ouvertures 10 peuvent être ovales, carrées ou polygonales. Dans ce cas, la dimension maximale des ouvertures carrées, mesurée selon la diagonale, est avantageusement comprise entre 0,5 millième et 5 millièmes du diamètre D2.

D'autre part, les ailettes 8 peuvent se présenter sous la forme d'une grille qui présente plusieurs rangées d'ouvertures 10 pouvant être, par exemple, carrées ou circulaires.

Dans l'exemple représenté aux figures 3 à 5, les ailettes 8 équipent l'ensemble de distribution 1 d'une turbine Pelton mais selon l'invention, les ailettes 8 peuvent équiper un conduit courbe appartenant à une machine hydraulique quelconque.

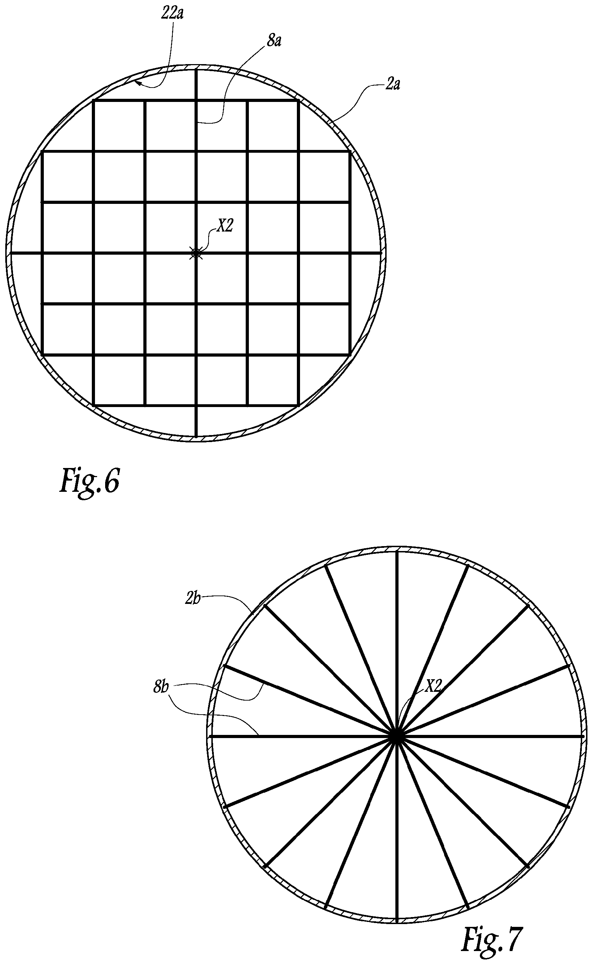

La figure 6 représente un deuxième mode de réalisation de l'invention, dans lequel les éléments analogues à ceux du premier mode de réalisation portent les mêmes références numériques, suivies de la lettre « a ». Dans la suite, on décrit essentiellement les caractéristiques qui distinguent le deuxième mode de réalisation du premier mode.

Des ailettes 8a, dans une section transversale d'un conduit courbe 2a, forment un maillage en nids d'abeilles de toute cette section. Dans ce deuxième mode de réalisation, les ailettes 8a, en plus de s'étendre à proximité d'une paroi interne 22a du conduit 2a, sont également présentes dans la zone centrale du conduit 2a. Des ouvertures, analogues à celles décrites pour le premier mode de réalisation, sont ménagées tout le long des ailettes 8a, que ce soit à proximité de la paroi interne 22a ou au niveau de la zone centrale du conduit de distribution 2a.

La figure 7 représente un troisième mode de réalisation, dans lequel les éléments analogues à ceux du premier mode de réalisation portent les mêmes références numériques, suivies de la lettre « b ». Dans la suite, on décrit essentiellement les caractéristiques qui distinguent le troisième mode de réalisation du premier mode.

Dans le troisième mode de réalisation, un conduit courbe 2b est équipé de plusieurs ailettes 8b fixées à une paroi intérieure 22b du conduit 2b.

Les ailettes 8b sont disposées radialement et se rejoignent au centre du conduit de distribution 2b, au niveau d'un axe longitudinal central X2 du conduit 2b. La hauteur H8b des ailettes 8b est donc plus importante que la hauteur H8 des ailettes du premier mode de réalisation.

Dans ce mode de réalisation, les ailettes 8b forment un maillage en étoile de toute la section du conduit 2b, en ce sens que les ailettes 8b traversent de part en part le conduit 2b.

Les ailettes 8b sont percées d'ouvertures, non visibles à la figure 6, analogues à celles décrites pour le premier mode de réalisation.

Les modes de réalisation et variantes décrits ci-dessus peuvent être combinés entre eux pour donner lieu à d'autres modes de réalisation de l'invention.

## Revendications

1. Ensemble de distribution (1) appartenant à une machine hydraulique et comprenant un conduit courbe (2, 41, 42, 43, 44, 45 ; 2a ; 2b) destiné à canaliser un écoulement (FE) pour alimenter une roue (R) de la machine hydraulique, cette roue étant destinée à tourner autour d'un axe de rotation (Y), le conduit courbe (2, 41, 42, 43, 44, 45 ; 2a ; 2b) étant pourvu d'ailettes (8 ; 8a ; 8b) qui sont fixées à sa paroi intérieure (22 ; 22a ; 22b), et comportant des ouvertures (10), **caractérisé en ce que** les ouvertures (10) de deux ailettes (8 ; 8a ; 8b) adjacentes sont décalées les unes par rapport aux autres le long d'un axe (X2) qui suit la courbure du conduit courbe.

2. Ensemble de distribution (1) selon la revendication 1, **caractérisé en ce que** dans une section transversale du conduit courbe (2, 41, 42, 43, 44, 45), une hauteur (H8) de chaque ailette (8), mesurée perpendiculairement à un axe longitudinal (X8) de cette ailette (8), est comprise entre 1 centième et 1 dixième du diamètre intérieur (D2) du conduit courbe (2, 41, 42, 43, 44, 45).

3. Ensemble de distribution (1) selon la revendication 1, **caractérisé en ce que** les ailettes (8a ; 8b) forment, dans une section transversale du conduit courbe (2a ; 2b), un maillage de toute cette section.

4. Ensemble de distribution (1) selon l'une des revendications précédentes, **caractérisé en ce que** les ouvertures (10) sont circulaires et **en ce que** le diamètre (D10) de chaque ouverture (10) est compris entre 0.5 millième et 5 millièmes du diamètre intérieur (D2) du conduit courbe (2, 41, 42, 43, 44, 45 ; 2a ; 2b).

5. Ensemble de distribution (1) selon l'une des revendications 1 à 3, **caractérisé en ce que** les ouvertures (10) sont de forme non circulaire.

6. Ensemble de distribution (1) selon l'une des revendications précédentes, **caractérisé en ce qu'**un axe longitudinal (X8) de chaque ailette (8 ; 8a ; 8b) est parallèle à un axe longitudinal (X2) du conduit courbe (2, 41, 42, 43, 44, 45 ; 2a ; 2b).

7. Ensemble de distribution (1) selon l'une des revendications 1 à 5, **caractérisé en ce qu'**un axe longitudinal (X8) des ailettes (8 ; 8a ; 8b) est oblique par rapport à un axe longitudinal (X2) du conduit courbe (2, 41, 42, 43, 44, 45 ; 2a ; 2b).

8. Ensemble de distribution (1) selon l'une des revendications 1 à 6, **caractérisé en ce que** les ailettes (8 ; 8a ; 8b) sont des grilles qui présentent plusieurs rangées d'ouvertures (10).

9. Ensemble de distribution (1) selon l'une des revendications précédentes, **caractérisé en ce qu'**il est configuré pour alimenter une roue (R) de turbine Pelton.

10. Machine hydraulique, **caractérisée en ce qu'**elle comprend un ensemble de distribution (1) selon l'une quelconque des revendications précédentes.

## Patentansprüche

1. Spiralgehäuse (1), das zu einer hydraulischen Maschine gehört und eine gekrümmte Leitung (2, 41, 42, 43, 44, 45; 2a ; 2b) zum Kanalisieren einer Strömung (FE) zum Führen eines Rads (R) der hydraulischen Maschine umfasst, wobei das Rad um eine Drehachse (Y) drehbar ist, wobei die gekrümmte Leitung (2, 41, 42, 43, 44, 45 ; 2a; 2b) mit Rippen (8 ; 8a ; 8b) versehen ist, die an ihrer Innenwand (22 ; 22a ; 22b) befestigt sind, und Öffnungen (10) aufweist, **dadurch gekennzeichnet, dass** die Öffnungen (10) von zwei benachbarten Rippen (8 ; 8a ; 8b) entlang einer Achse (X2), die der Kurve der gekrümmten Leitung folgt, zueinander versetzt sind.

2. Spiralgehäuse (1) nach Anspruch 1, **dadurch gekennzeichnet, dass** in einem Querschnitt der gekrümmten Leitung (2, 41, 42, 43, 44, 45) eine Höhe (H8) jeder Rippe (8), gemessen senkrecht zu einer Längsachse (X8) jeder Rippe (8), zwischen einem Hundertstel und einem Zehntel des Innendurchmessers (D2) der gekrümmten Leitung (2, 41, 42, 43, 44, 45) liegt.

3. Spiralgehäuse (1) nach Anspruch 1, **dadurch gekennzeichnet, dass** die Rippen (8a ; 8b) in einem Querschnitt der gekrümmten Leitung (2a ; 2b) ein Netz mit diesem gesamten Querschnitt bilden.

4. Spiralgehäuse (1) nach einem der vorstehenden Ansprüche, **dadurch gekennzeichnet, dass** die Öffnungen (10) kreisförmig sind und dass der Durchmesser (D10) jeder Öffnung (10) zwischen 0,5 Tausendstel und 5 Tausendstel des Innendurchmessers (D2) der gekrümmten Leitung (2, 41, 42, 43, 44, 45 ; 2a ; 2b) beträgt.

5. Spiralgehäuse (1) nach einem der Ansprüche 1 bis 3, **dadurch gekennzeichnet, dass** die Öffnungen (10) unrund ausgebildet sind.

6. Spiralgehäuse (1) nach einem der vorstehenden Ansprüche, **dadurch gekennzeichnet, dass** eine Längsachse (X8) jeder Rippe (8 ; 8a ; 8b) parallel zu einer Längsachse (X2) der gekrümmten Leitung (2, 41, 42, 43, 44, 45; 2a; 2b) verläuft.

7. Spiralgehäuse (1) nach einem der Ansprüche 1 bis 5, **dadurch gekennzeichnet, dass** eine Längsachse (X8) der Rippen (8; 8a; 8b) schräg zu einer Längsachse (X2) der gekrümmten Leitung (2, 41, 42, 43, 44, 45 ; 2a ; 2b) verläuft.

8. Spiralgehäuse (1) nach einem der Ansprüche 1 bis 6, **dadurch gekennzeichnet, dass** die Rippen (8 ; 8a ; 8b) Gitter sind, die mehrere Reihen von Öffnungen (10) aufweisen.

9. Spiralgehäuse (1) nach einem der vorstehenden Ansprüche, **dadurch gekennzeichnet, dass** es zum Führen eines Pelton-Turbinenrads (R) konfiguriert ist.

10. Hydraulische Maschine, **dadurch gekennzeichnet, dass** sie ein Spiralgehäuse (1) nach einem der vorstehenden Ansprüche umfasst.

## Claims

1. Distribution group (1) belonging to a hydraulic machine and comprising a curved conduit (2, 41, 42, 43, 44, 45; 2a; 2b) intended to channel a flow (FE) to supply the wheel (R) of the hydraulic machine, the wheel being intended to rotate about a rotation axis (Y), the curved conduit (2, 41, 42, 43, 44, 45; 2a; 2b) being provided with fins (8; 8a; 8b) that are secured to its inner wall (22; 22a; 22b) and comprising openings (10), **characterised in that** the openings (10) of two adjacent fins (8; 8a; 8b) are offset with respect to one another along an axis (X2) that follows the curvature of the curved conduit.

2. Distribution group (1) according to claim 1, **characterised in that** inside a transversal section of the curved conduit (2, 41, 42, 43, 44, 45), a height (H8) of each fin (8), measured perpendicularly to a longitudinal axis (X8) of the fin (8), ranges from 1 hundredth to 1 tenth of the inner diameter (D2) of the curved conduit (2, 41, 42, 43, 44, 45).

3. Distribution group (1) according to claim 1, **characterised in that** the fins (8a; 8b) form, in a transversal section of the curved conduit (2a; 2b), a meshing of this entire section.

4. Distribution group (1) according to one of the preceding claims, **characterised in that** the openings (10) are circular and **in that** the diameter (D10) of each opening (10) ranges from 0.5 thousandth to 5 thousandths of the inner diameter (D2) of the curved conduit (2, 41, 42, 43, 44, 45; 2a; 2b).

5. Distribution group (1) according to one of the claims 1 to 3, **characterised in that** the openings (10) have a non-circular shape.

6. Distribution group (1) according to one of the preceding claims, **characterised in that** a longitudinal axis (X8) of each fin (8; 8a; 8b) is parallel to a longitudinal axis (X2) of the curved conduit (2, 41, 42, 43, 44, 45; 2a; 2b).

7. Distribution group (1) according to one of the claims 1 to 5, **characterised in that** a longitudinal axis (X8) of the fins (8; 8a, 8b) is at an angle with respect to a longitudinal axis (X2) of the curved conduit (2, 41, 42, 43, 44, 45; 2a; 2b).

8. Distribution group (1) according to one of the claims 1 to 6, **characterised in that** the fins (8; 8a; 8b) are grids that feature several rows of openings (10).

9. Distribution group (1) according to one of the preceding claims, **characterised in that** it is configured to power a wheel (R) of a Pelton turbine.

10. Hydraulic machine, **characterised in that** it comprises a distribution group (1) according to any one of the preceding claims.
